# EUROPÄISCHE PATENTSCHRIFT

(11) **EP 1 491 783 B1**
(45) Veröffentlichungstag und Bekanntmachung des Hinweises auf die Patenterteilung: **17.08.2005**
(21) Anmeldenummer: 03101853.4
(22) Anmeldetag: 24.06.2003
(51) Int. Cl.: F16D 1/09

(54) **Spannvorrichtung fuer Welle-Nabe-Verbindung**
Clamping device for shaft-hub connection
Dispositif de serrage pour liaison arbre-moyeu

(43) Veröffentlichungstag der Anmeldung: 29.12.2004
(73) Patentinhaber: Ford Global Technologies, LLC, A subsidary of Ford Motor Company, Dearborn, MI 48126 (US)
(72) Erfinder: Stoffels, Harald, 50735, Koeln (DE)
(74) Vertreter: Drömer, Hans-Carsten, Dr.-Ing.

(56) Entgegenhaltungen:
- EP-A- 0 373 781
- DE-U- 7 205 702
- US-A- 1 739 939
- US-A- 2 334 606
- PATENT ABSTRACTS OF JAPAN vol. 017, no. 618 (M-1510), 15. November 1993 (1993-11-15) & JP 05 187449 A (MITSUBISHI ELECTRIC CORP), 27. Juli 1993 (1993-07-27)

## Beschreibung

Die Erfindung betrifft eine Spannvorrichtung als Schraub-Klemm-Verbindung für eine Welle-Nabe-Verbindung, bei der ein Nabenkörper mit einer Welle lösbar verbunden ist, wobei die Spannvorrichtung zumindest zwei Klemmkörpern zum kraftschlüssigen Verbinden des Nabenkörpers mit der Welle und eine Mutter zum Spannen und Lösen aufweist.

Derartige Spannvorrichtungen als Schraub-Klemm-Verbindungen sind bekannt. In der DE 42 11 365 C1 ist ein Spannsatz zur lösbaren Klemmverbindung zwischen Welle und Nabe beschrieben. Der Spannsatz weist zwei konische Ringe auf, die durch eine Normmutter zum Spannen und Lösen gegeneinander verschoben werden. In der Mutter ist in deren Stirnseite eine sackförmige Kammer mit Hinterschnitt eingebracht, in die einer der konischen Ringe, welcher an seinem freien Ende einen Hals mit Bund besitzt federnd einrastet.

Die EP A 0 373 781 betrifft eine gefedert gelagerte Antriebsbuchse für den Antrieb von Zentrifugenrotoren. Die Zentrifuge weist einen Rotorkörper mit einer separat geformten zentralen Antriebsnabenbuchse auf. Die Rotorkonstruktion besteht aus einem Rotorkörper, der bezogen auf eine Drehachse des Rotors symmetrisch ausgebildet ist und der zumindest eine Öffnung zur Aufnahme von zu separierbaren Material aufweist. Der Rotorkörper ist aus einem Verbundmaterial gefertigl, welches anisotrope Eigenschaften gesteigerter Verformungswiderstände normal zur Drehachse des Rotors aufweist, wobei der Rotor harzimprägnierte Fasem enthält. Die Rotorkonstruktion weist aber auch zumindest eine konische Öffnung auf, die konzentrisch zur Drehachse des Rotors ist, wobei die Öffnung in dem Rotorkörper gebildet ist, um eine Rotorantriebsnabe des Rotorkömers aufzunehmen. Die Rotorkonstruktion weist auch eine Antriebsnabenbuchse auf, die eine Öffnung zur Aufnahme der Zentrifugenwelle bildet, um den Rotorkömer um die Drehachse zu drehen. Die Antriebsnabenbuchse bildet weiterhin eine im wesentlichen konisch zur im wesentlichen Öffnung des Rotorkörpers angepasste Oberfläche. Die angepassten Oberflächen sind auf der Außenfläche der Rotorantriebsnabenbuchse gebildet, um einen Kontakt mit der im wesentlichen konischen Öffnung des Rotors zu bilden. Die passenden Oberflächen sind konzentrisch zur Drehachse des Rotors. Die Rotorkonstruktion weist auch Federmittel auf, um die Antriebsnabenbuchse und den Rotorkömer betriebsbedingt zu verbinden, indem die im wesentlichen konischen und passenden Oberflächen während der Drehung des Rotors aneinander zu pressen. Die im wesentlichen konischen Oberflächen weisen jeweils eine Neigung auf, um einer Selbstarretierung der Oberflächen bezogen auf eine Relativbewegung vorzubeugen und um dynamisches Selbstzentrierungsgleiten auf den konischen Oberflächen während dynamischer Differentialexpansion der einen Oberflächen zu der anderen während der Drehung des Rotors zu erlauben.

Hierzu offenbart die EP 0 373 781 A2 eine Verbindung einer Antriebsbuchse mit einer Platte (einem Rotor). An einem Rand einer kreisrunden Unterlegplatte ist eine konische Oberfläche angeordnet. An einer anderen Oberfläche der Platte ist eine dazu korrespondierende konische Oberfläche angeordnet. An einem unteren Rand weist die Platte eine konische Oberfläche auf, die mit einer konischen Oberfläche der Antriebsbuchse zusammenwirkt. Zwischen einer Mutter und der Unterlegplatte ist eine Feder angeordnet, die auf die Unterlegplatte mit einer derart starken Kraft wirkt, dass die Platte mit einer entsprechend starken Kraft auf die konische Oberfläche gedrückt wird.

Ein Hauptnachteil ist bei bekannten Schraub-Klemm-Verbindungen darin zu sehen, daß die Welle-Nabe-Verbindung eine geringe Widerstandfähigkeit bezogen auf Drehschwingungen aufweist, die insbesondere bei aufgeladenen Motoren z.B. mittels Turbolader oder Motoren mit Vorverdichtung in Kombination mit direkter Einspritzung beobachtet werden.

Nachteilig ist weiterhin, daß Bauteile der bekannten Schraub-Klemm-Verbindungen unter Beachtung äußerst genauer Toleranzen hergestellt werden müssen, was zu einer erheblichen Kostensteigerung führt. Zudem sind die bekannten Schraub-Klemm-Verbindungen mit ihren Bauteilen höchst kompliziert aufgebaut.

Der vorliegenden Erfindung liegt die Aufgabe zugrunde, eine verbesserte Spannvorrichtung zur Verfügung zustellen, so daß die Welle-Nabe-Verbindung erheblich widerstandfähiger gegen Drehschwingungen und zudem preiswerter in der Herstellung und einfach im Aufbau ist.

Erfindungsgemäß wird dies dadurch erreicht, daß die Klemmkörper zum einen als Mutterkeil und zum anderen als Wellenkeil jeweils mit ihren konusförmigen Gleitflächen an dem Nabenkörper anliegen, wobei der Mutterkeil einstückig mit der Mutter hergestellt ist.

Damit wird eine verbesserte Spannvorrichtung zur Verfügung gestellt, die eine wesentlich höhere Widerstandsfähigkeit gegen Drehschwingungen aufweist. Die erfindungsgemäße Spannvorrichtung ist einfach im Aufbau und preiswert herzustellen.

Günstig im Sinne der Erfindung ist, daß die konusförmige Gleitfläche des Mutterkeils gegenläufig zur konusförmigen Gleitfläche des Wellenkeils ist, so daß ein Doppelkeil gebildet ist. Vorteilhaft zentriert sich der Nabenkörper damit bei der Herstellung der kraftschlüssigen Verbindung selbst. Zweckmäßigerweise weist die Nabe dabei zu den konusförmigen Gleitflächen korrespondierende Gegenflächen auf, so der Effekt der Selbstzentrierung weiter erhöht wird.

Weitere vorteilhafte Ausgestaltungen der Erfindung sind in den Unteransprüchen und der folgenden Figurenbeschreibung beschrieben. Es zeigen:
- Figur 1: eine Seitenansicht mit einem Halbschnitt einer Spannvorrichtung,
- Figur 2: einen Wellenkeil gemäß einem ersten Ausführungsbeispiel im Querschnitt,
- Figur 3: eine weitere Ausführungsform der Spannvorrichtung.

In den einzelnen Figuren sind gleiche Teile mit denselben Bezugszeichen versehen, so daß sie in der Regel auch nur einmal beschrieben werden.

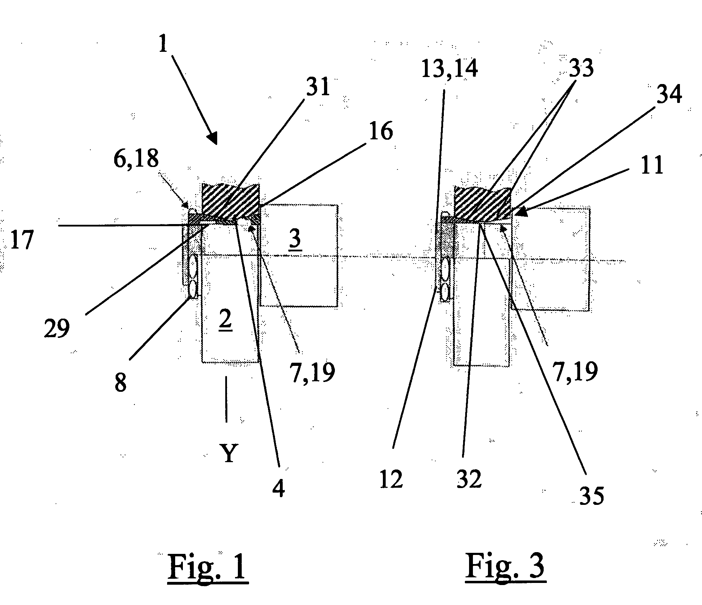

Figur 1 zeigt eine Spannvorrichtung 1 für eine Welle-Nabe-Verbindung bei der ein Nabenkörper 2 mit einer Welle 3 lösbar verbunden ist. Der Nabenkörper 2 weist eine Nabe 4 auf. Der Spannvorrichtung 1 sind zwei Klemmkörper 6,7 zum kraftschlüssigen Verbinden des Nabenkörpers 2 mit der Welle 3 zugeordnet. Des Weiteren weist die Spannvorrichtung 1 eine Mutter 8 zum Spannen und Lösen auf.

Die Welle 3 weist an ihrem stimseitigen Ende 11 einen Lagerfortsatz 12 auf, an dessen freiem Endbereich 13 ein Außengewinde 14 angeordnet ist. Die Welle 3 weist einen größeren Durchmesser auf als der Lagerfortsatz 12, so daß im Übergang von der Welle 3 zum Lagerfortsatz 12 eine Schulter 16 gebildet ist. Ein Durchmesser des Lagerfortsatzes 12 ist kleiner als ein Durchmesser der Nabe 4, so daß der Nabenkörper 2 von dem freien Endbereich 13 ausgehend in Richtung zur Schulter 16 auf den Lagerfortsatz 12 aufgeschoben werden kann. Zwischen der Welle 2 und der Nabe 4 ist aufgrund der unterschiedlichen Durchmesser ein Spalt 17 gebildet.

Die Klemmkörper 6, 7 liegen zum einen als Mutterkeil 18 und zum anderen als Wellenkeil 19 einerseits an dem Nabenkörper 2 und andererseits an dem Lagerfortsatz 12 an. Der Mutterkeil 18 ist der Mutter 8 und der Wellenkeil 19 ist der Welle 3 zugeordnet. Sowohl der Mutterkeil 18 als auch der Wellenkeil 19 ist jeweils ringförmig ausgestaltet. Der Wellenkeil 19 ist an den Außendurchmesser des Lagerfortsatzes 12 angepaßt, vorzugsweise ist eine Spielpassung vorgesehen.

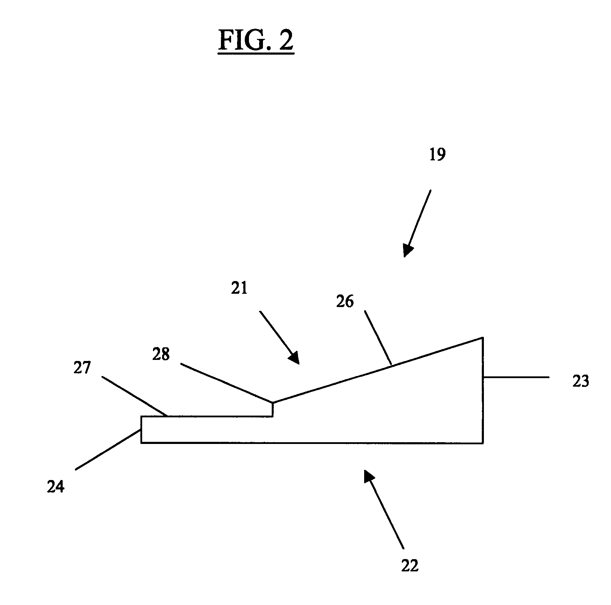

Der Wellenkeil 19 (Figur 2) weist eine Nabenfläche 21 und eine zur Nabenfläche 21 gegenüberliegende Wellenfläche 22 auf. Die Wellenfläche 22 ist durchgehend zylindrisch ausgestaltet und liegt an dem Lagerfortsatz 12 an (Figur 1). Mit einer Stützfläche 23 stützt sich der Wellenkeil 19 an der Schulter 16 ab. Mit einem zur Stützfläche 23 gegenüberliegenden freien Ende 24 ragt der Wellenkeil 19 in den Spalt 17 hinein, wobei der Wellenkeil 19 vorzugsweise länger als eine halbe Breite des Nabenkörpers 2 ist, so daß das freie Ende 24 eine Mittellinie Y-Y des Nabenkörpers 2 überragt (Figur 1).

Die Nabenfläche 21 ist stufenförmig mit einer konusförmigen Gleitfläche 26 und einer zylindrischen Auflagefläche 27 ausgestaltet. Im Übergang von der konusförmigen Gleitfläche 26 zur zylindrischen Auflagefläche 27 kann eine Stufe 28 angeordnet sein. Die konusförmige Gleitfläche 26 verjüngt sich ausgehend von der Stützfläche 23 in Richtung zum freien Ende 24 bis zur Stufe 28. Von der Stufe 28 ausgehend endet die zylindrische Auflagefläche 27 an dem freien Ende 24. Das freie Ende 24 ist als abgeflachte Spitze ausgebildet (Figur 2).

Der Mutterkeil 18 weist eine zum Lagerfortsatz 12 weisende, durchgehende zylindrische Schiebefläche 29 auf. Eine zur zylindrischen Schiebefläche 29 gegenüberliegende Gleitfläche 31 ist durchgehend konusförmig ausgebildet. Der Mutterkeil 18 ist derart an der Mutter 8 angeordnet, daß der Mutterkeil 18 mit seinem freien Ende 32 zum Spalt 17 orientiert und mit seiner zylindrischen Schiebefläche 29 zum Lagerfortsatz 12 beabstandet ist (Figur 1).

Die über den Mutterkeil 18 in Umfangsrichtung überstehende Erhöhung ist eine Werkzeugangriffsfläche der Mutter 8.

Die konusförmigen Gleitflächen 26, 31 besitzen vorzugsweise den gleichen Steigungswinkel. Die Nabe 4 des Nabenkörpers 2 weist vorzugsweise zwei jeweils zu den konusförmigen Gleitflächen 26 bzw. 31 korrespondierende konusförmige Gegenflächen 33 auf, so daß die Nabe 4 eine zum Lagerfortsatz 12 weisende, vorzugsweise abgeflachte Spitze 35 aufweist.

In dem in Figur 1 dargestellten Ausführungsbeispiel ist die Mutter 8 mit dem Mutterkeil 18 einstückig hergestellt, wobei der Wellenkeil 19 ein separates Bauteil ist.

In Figur 1 ist ein gespannter Zustand der Welle-Nabe-Verbindung dargestellt. Zunächst wird hierzu der Wellenkeil 19 auf den Lagerfortsatz 12 aufgeschoben, so daß seine Stützfläche 23 an der Schulter 16 anliegt. Anschließend wird der Nabenkörper 2 auf den Lagerfortsatz 12 aufgeschoben. Der Nabenkörper 2 liegt mit seiner zur konusförmigen Gleitfläche 26 des Wellenkeils 19 korrespondierenden Gegenfläche 33 locker an dem Wellenkeil 19 an. Derart vormontiert wird die Mutter 8 mit ihrem Mutterkeil 18 auf das Außengewinde 14 aufgeschraubt. Vorteilhaft ist hierbei, daß das Außengewinde 14 derart bemessen ist, daß der Nabenkörper 2 im gespannten Zustand das Außengewinde 14 etwas abdeckt. Der Mutterkeil 18 wird durch die in Richtung zur Schulter 16 orientierte Schraubbewegung der Mutter 8 in den Spalt 17 geführt und gleitet mit seiner konusförmigen Gleitfläche 31 an der korrespondierenden Gegenfläche 33 des Nabenkörpers 2 in Richtung zur Schulter 16. Hierdurch wird der Nabenkörper 2 angehoben und etwas in Richtung zur Schulter 16 verschoben. Dadurch, daß der Mutterkeil 18 mit seiner zylindrischen Schiebefläche 29 zum Lagerfortsatz 12 beabstandet ist, legt sich der Mutterkeil 18 mit seiner zylindrischen Schiebefläche 29 auf der zylindrischen Auflagefläche 27 des Wellenkeils 19 auf. Durch weiteres Aufschrauben der Mutter 8 wird das freie Ende 32 des Mutterkeils 18 weiter in Richtung zur Stufe 28 des Wellenkeils 19 geschoben.

Im gespannten Zustand liegen sowohl der Wellenkeil 19 als auch der Mutterkeil 18 mit ihren jeweiligen konusförmigen Gleitflächen 26 bzw. 31 an den jeweils korrespondierenden Gegenflächen 33 der Nabe 4 des Nabenkörpers 2 an. Hierdurch ist der Nabenkörper 2 kraftschlüssig mit der Welle 2 verbunden. Der Mutterkeil 18 liegt hierbei einerseits mit seiner konusförmigen Gleitfläche 31 an der korrespondierenden Gegenfläche 33 des Nabenkörpers 2 und andererseits mit seiner Schiebefläche 29 kraftschlüssig auf der Auflagefläche 27 des Wellenkeils 19 an. Durch die einwirkende Kraft des Mutterkeils 18 auf die Auflagefläche 27 wird der Wellenkeil 19 über seine zylindrische Wellenfläche 22 kraftschlüssig mit dem Lagerfortsatz 12 verbunden. Dadurch, daß der Nabenkörper 2 bei dem Schraubvorgang in Richtung zur Schulter 16 verschoben wird, wirkt auch eine Kraft auf die konusförmige Gleitfläche 26, so daß der Wellenkeil 19 kraftschlüssig mit dem Nabenkörper 2 verbunden ist.

Ein weiteres Ausführungsbeispiel einer Spannvorrichtung ist in Figur 3 dargestellt. Im Unterschied zu Figur 1 ist der Wellenkeil 19 nicht als separates Bauteil ausgeführt, sondern mit der Welle 2 zusammen einstückig hergestellt. Der Lagerfortsatz 12 weist hierbei eine Verdickung auf, die sich von der Schulter 16 in Richtung zum freien Endbereich 13 verjüngt, so daß die Nabenfläche 21 gebildet ist. Weiter ist die Nabenfläche 21 stufenlos als konusförmige Gleitfläche 34 ausgebildet. Der Wellenkeil 19 ist vorzugsweise derart ausgestaltet, das seine Spitze im gespannten Zustand bis zur Mittellinie Y-Y des Nabenkörpers 2 reicht. Der Mutterkeil 18 ist derart an der Mutter 8 angeordnet, daß der Mutterkeil 18 mit seiner zylindrischen Schiebefläche 29 auf dem Lagerfortsatz 12 aufliegt. Im Unterschied zu Figur 1 ist hierbei der Mutterkeil 18 an den Lagerfortsatz 12 vorzugsweise mittels Spielpassung angepaßt. Weiter ist der Mutterkeil 18 vorzugsweise derart ausgestaltet, daß dieser mit seiner Spitze 32 im gespannten Zustand kurz vor der Mittellinie Y-Y endet.

Zur Vormontage wird nun der Nabenkörper 2 derart aufgeschoben, daß die beiden korrespondierenden Gleitflächen 34 bzw. 33 locker aufeinander liegen. Die Mutter 8 wird auf das Außengewinde 12 aufgeschraubt. Durch das weitere Eindringen des Mutterkeils 18 in den Spalt 17 wird der Nabenkörper 2 kraftschlüssig mit der Welle 3 verbunden.

Im gespannten Zustand liegen sowohl der Wellenkeil 19 als auch der Mutterkeil 18 mit ihren jeweiligen konusförmigen Gleitflächen 34 bzw. 31 an den korrespondierenden Gegenflächen 33 der Nabe 4 des Nabenkörpers 2 an. Hierdurch ist der Nabenkörper 2 kraftschlüssig mit der Welle 2 verbunden. Im Unterschied zu dem Ausführungsbeispiel nach Figur 1 liegt der Mutterkeil 18 mit seiner zylindrischen Schiebefläche 29 an den Lagerfortsatz 12 und somit kraftschlüssig an der Welle 2 an.

Die zuvor beschriebene Spannvorrichtung 1 nach den beiden Ausführungsbeispielen ist insbesondere zur Verbindung eines Nockenwellenrades mit einer Nockenwelle in geladenen Motoren, z. B. Turbolader oder Motoren mit Vorverdichtung mit Direkteinspritzung geeignet, bei denen erhebliche dynamische Drehschwingungen auftreten. Die Welle-Nabe-Verbindung mit der erfindungsgemäßen Spannvorrichtung 1 weist eine erhöhte Fähigkeit zur Aufnahme von Drehschwingungen auf. Dies wird vorteilhaft durch eine hohe Wirkfläche und daraus folgend einer großen Flächenpressung des Mutterkeils 18 und/oder des Wellenkeils 19 erreicht.

Bei beiden Ausführungsbeispielen bilden der Mutterkeil 18 und der Wellenkeil 19 zusammen einen Doppelkeil mit zueinander gegenläufig orientierten konusförmigen Gleitflächen 31, 26 bzw. 31, 34. Des Weiteren zentriert sich der Nabenkörper 2 bei dem Spannvorgang durch die erfindungsgemäße Ausgestaltung des Mutterkeils 18 und des Wellenkeils 19 zueinander selbst. Günstig im Sinne der Erfindung ist hierbei, daß die Nabe 4 mit zu den konusförmigen Gleitflächen 26, 31 bzw. 34, 31 korrespondierenden Gegenflächen 33 ausgestaltet ist, wodurch der Effekt der Selbstzentrierung weiter erhöht ist. Selbstverständlich kann der Nabenkörper 2 aber auch in üblicher Weise ausgeführt sein.

Vorteilhafterweise kann das Außengewinde 14 des Lagerfortsatzes 12 relativ grob geschnitten sein, da die Mutter 8 mit einem automatischen Drehwerkzeug aufgeschraubt werden kann. Hierbei kann auf vorhandene Drehwerkzeuge in der Fertigungslinie zurückgegriffen werden, ohne daß ein neues Drehwerkzeug in der Fertigungslinie eingeführt werden müßte, wobei die erfindungsgemäße Spannvorrichtung lediglich Drehmomenten beeinflußt ist, ohne Drehwinkel beeinflußt zu sein. Auch hierbei ist die hohe Flächenpressung vorteilhaft.

Zum Lösen der Welle-Nabe-Verbindung' wird die kraftschlüssige Verbindung aufgehoben, indem die Mutter 8 gelöst wird. Um Wartungsarbeiten durchführen zu können, ist es zweckmäßig, daß der Mutterkeil 18 und der Wellenkeil 19 aus einem zu dem Wellenmaterial relativ weicheren Material besteht, was ein Lösen erleichtert. Allerdings besteht der Wellenkeil 19 gemäß der Ausführungsform nach Figur 3 aus dem selben Material wie die Welle 2. Alternativ kann die Mutter 8 härter als die Welle 2 sein, um z. B. ein selbstschneidendes Gewinde zu erhalten. Die konusförmige Gleitfläche 34 kann zur konusförmigen Gleitfläche 31 des Mutterkeils 18 einen unterschiedlichen Steigungswinkel aufweisen, um einen Setzausgleich zu erreichen. Hierbei könnte der Steigungswinkel der konusförmigen Gleitfläche 34 bzw. 26 größer sein als der Steigungswinkel der konusförmigen Gleitfläche 31.

Die Erfindung ist nicht auf die vorbeschriebenen Ausführungsformen beschränkt, sondern umfaßt auch alle gleichwirkenden Mittel oder Kombinationen. Denkbar ist z. B. das der Wellenkeil 19 in der Ausführungsform nach Figur 3 die Ausgestaltung wie zu Figur 1 und 2 beschrieben aufweisen kann, oder als separates Bauteil mit einer stufenlosen Nabenfläche 21 als konusförmige Gleitfläche 34 ausgestaltet ist. Möglich ist auch, daß der Mutterkeil 18 und/oder der Wellenkeil 19 umfangsmäßig in der Art eines Zahnringes unterbrochen sind, wobei allerdings insbesondere bei der Ausführungsform gemäß Figur 1 auf eine gleiche Unterteilung geachtet werden sollte.

## Patentansprüche

1. Spannvorrichtung als Schraub-Klemm-Verbindung für eine Welle-Nabe-Verbindung, bei der ein Nabenkörper (2) mit einer Welle (3) lösbar verbunden ist, wobei die Spannvorrichtung (1) zumindest zwei Klemmkörper (6,7) zum kraftschlüssigen Verbinden der Welle (3) mit dem Nabenkörper (2) und eine Mutter (8) zum Spannen und Lösen aufweist,
**dadurch gekennzeichnet, daß**
die Klemmkörper (6,7) zum einen als Mutterkeil (18) und zum anderen als Wellenkeil (19) jeweils mit ihren konusförmigen Gleitflächen (31,26; 31,34) an dem Nabenkörper (2) anliegen, wobei der Mutterkeil (18) einstöckig mit der Mutter (8) hergestellt ist.

2. Spannvorrichtung nach Anspruch 1,
**dadurch gekennzeichnet, daß**
die konusförmige Gleitfläche (31) des Mutterkeils (18) gegenläufig zur konusförmigen Gleitfläche (26;34) des Wellenkeils (19) ist, so daß ein Doppelkeil gebildet ist, wobei der Wellenkeil (19) der Welle (3) zugeordnet ist.

3. Spannvorrichtung nach Anspruch 1 oder 2,
**dadurch gekennzeichnet, daß**
die Welle (3) an einer Stirnseite (11) einen Lagerfortsatz (12) aufweist, an dessen freiem Endbereich (13) ein Außengewinde (14) zur Aufnahme der Mutter (8) angeordnet ist, wobei an der Welle (3) als Übergang zum Lagerfortsatz (12) eine Schulter (16) gebildet ist.

4. Spannvorrichtung nach einem der vorhergehenden Ansprüche,
**dadurch gekennzeichnet, daß**
der Wellenkeil (19) eine Nabenfläche (21) und eine zur Nabenfläche (21) gegenüberliegende Wellenfläche (22) aufweist, die durchgehend zylindrisch ausgestaltet ist, wobei die Nabenfläche (21) stufenförmig mit der konusförmigen Gleitfläche (26) und einer zylindrischen Auflagefläche (27) ausgestaltet ist.

5. Spannvorrichtung nach einem der Ansprüche 1 bis 4,
**dadurch gekennzeichnet, daß**
der Wellenkeil (19) eine Nabenfläche (21) aufweist, die durchgehend als konusförmige Gleitfläche (34) ausgestaltet ist.

6. Spannvorrichtung nach einem der Ansprüche 1 bis 5,
**dadurch gekennzeichnet, daß**
der Wellenkeil (19) ein separates Bauteil ist.

7. Spannvorrichtung nach einem der Ansprüche 1 bis 5,
**dadurch gekennzeichnet, daß**
die Welle (3) an ihrem Lagerfortsatz (12) eine Verdickung aufweist, die sich von der Schulter (16) in Richtung zum freien Endbereich (13) verjüngt, so daß der Wellenkeil (19) mit seiner konusförmigen Gleitfläche (34) einstückig mit der Welle (3) gebildet ist.

8. Spannvorrichtung nach einem der vorhergehenden Ansprüche,
**dadurch gekennzeichnet, daß**
der Nabenkörper (2) an seiner Nabe (4) zwei zu den konusförmigen Gleitflächen (31,26; 31,34) korrespondierende Gleitflächen (33) aufweist.

9. Spannvorrichtung nach einem der Ansprüche 1 bis 6 und 8,
**dadurch gekennzeichnet, daß**
der Mutterkeil (18) mit seiner Mutter (8) und der Wellenkeil (19) aus einem weicheren Material bestehen als die Welle (3).

10. Spannvorrichtung nach einem der Ansprüche 1 bis 9,
**dadurch gekennzeichnet, daß**
der Mutterkeil (18) mit seiner Mutter (8) aus einem härteren Material besteht als die Welle (3).

## Claims

1. Clamping arrangement as a screwed/clamped connection for a shaft/hub connection, in which a hub body (2) is releasably connected to a shaft (3), the clamping arrangement (1) having at least two clamping bodies (6, 7) for the frictional connection of the shaft (3) to the hub body (2) and a nut (8) for the clamping and release, **characterized in that** the clamping bodies (6, 7), on the one hand as nut key (18) and on the other hand as shaft key (19), in each case bear with their conical sliding surfaces (31, 26; 31, 34) against the hub body (2), the nut key (18) being formed integrally with the nut (8).

2. Clamping arrangement according to Claim 1,
**characterized in that** the conical sliding surface (31) of the nut key (18) is oriented in the opposite direction to the conical sliding surface (26; 34) of the shaft key (19), so that a double key is formed, the shaft key (19) being assigned to the shaft (3).

3. Clamping arrangement according to Claim 1 or 2, **characterized in that** the shaft (3), at a front end (11), has a bearing extension (12), on whose free end region (13) an external thread (14) for holding the nut (8) is arranged, a shoulder (16) being formed on the shaft (3) as transition to the bearing extension (12).

4. Clamping arrangement according to one of the preceding claims, **characterized in that** the shaft key (19) has a hub surface (21) and a shaft surface (22) which is opposite the hub surface (21) and is of continuous cylindrical design, the hub surface (21) being of stepped design with the conical sliding surface (26) and a cylindrical bearing surface (27).

5. Clamping arrangement according to one of Claims 1 to 4, **characterized in that** the shaft key (19) has a hub surface (21) which is designed to be continuous as a conical sliding surface (34).

6. Clamping arrangement according to one of Claims 1 to 5, **characterized in that** the shaft key (19) is a separate component.

7. Clamping arrangement according to one of Claims 1 to 5, **characterized in that** the bearing extension (12) of the shaft (3) has a widened portion which tapers from the shoulder (16) in the direction of the free end region (13), so that the shaft key (19), with its conical sliding surface (34), is formed in one piece with the shaft (3).

8. Clamping arrangement according to one of the preceding claims, **characterized in that** the hub body (2), on its hub (4), has two sliding surfaces (33) corresponding to the conical sliding surfaces (31, 26; 31, 34).

9. Clamping arrangement according to one of Claims 1 to 6 and 8, **characterized in that** the nut key (18) with its nut (8) and the shaft key (19) are made of a softer material than the shaft (3).

10. Clamping arrangement according to one of Claims 1 to 9, **characterized in that** the nut key (18) with its nut (8) is made of a harder material than the shaft (3).

## Revendications

1. Dispositif de serrage en tant que liaison par vissage et serrage pour une liaison arbre-moyeu, dans lequel un corps de moyeu (2) est relié de manière desserrable à un arbre (3), le dispositif de serrage (1) présentant au moins deux corps de serrage (6, 7) pour la liaison par engagement par force de l'arbre (3) au corps de moyeu (2) et un écrou (8) pour le serrage et le desserrage,
**caractérisé en ce que**
les corps de serrage (6, 7) s'appliquent d'une part sous forme de cale d'écrou (18) et d'autre part sous forme de cale d'arbre (19) à chaque fois avec leurs surfaces de glissement coniques (31, 26 ; 31, 34) contre le corps de moyeu (2), la cale d'écrou (18) étant fabriquée d'une pièce avec l'écrou (8).

2. Dispositif de serrage selon la revendication 1,
**caractérisé en ce que**
la surface de glissement conique (31) de la cale d'écrou (18) est opposée à la surface de glissement conique (26 ; 34) de la cale d'arbre (19) de sorte qu'il se forme une double cale, la cale d'arbre (19) étant affectée à l'arbre (3).

3. Dispositif de serrage selon la revendication 1 ou 2,
**caractérisé en ce que**
l'arbre (3) présente sur un côté frontal (11) une avancée de palier (12) sur la région d'extrémité libre (13) de laquelle est disposé un filetage extérieur (14) pour recevoir l'écrou (8), un épaulement (16) étant formé sur l'arbre (3) en tant que transition vers l'avancée de palier (12).

4. Dispositif de serrage selon l'une quelconque des revendications précédentes,
**caractérisé en ce que**
la cale d'arbre (19) présente une surface de moyeu (21) et une surface d'arbre (22) opposée à la surface de moyeu (21), qui a une forme cylindrique continue, la surface de moyeu (21) étant réalisée en forme de gradin avec la surface de glissement conique (26) et une surface d'appui cylindrique (27).

5. Dispositif de serrage selon l'une quelconque des revendications 1 à 4,
**caractérisé en ce que**
la cale d'arbre (19) présente une surface de moyeu (21) qui est réalisée de manière continue sous forme de surface de glissement conique (34).

6. Dispositif de serrage selon l'une quelconque des revendications 1 à 5,
**caractérisé en ce que**
la cale d'arbre (19) est un composant séparé.

7. Dispositif de serrage selon l'une quelconque des revendications 1 à 5,
**caractérisé en ce que**
l'arbre (3) présente sur son avancée de palier (12) un épaississement, qui se rétrécit depuis l'épaulement (16) dans la direction de la région d'extrémité libre (13), de sorte que la cale d'arbre (19) avec sa surface de glissement conique (34) soit formée d'une pièce avec l'arbre (3).

8. Dispositif de serrage selon l'une quelconque des revendications précédentes,
**caractérisé en ce que**
le corps de moyeu (2) présente sur son moyeu (4) deux surfaces de glissement (33) correspondant aux surface de glissement coniques (31, 26 ; 31, 34).

9. Dispositif de serrage selon l'une quelconque des revendications 1 à 6 et 8,
**caractérisé en ce que**
la cale d'écrou (18) avec son écrou (8) et la cale d'arbre (19) se composent d'un matériau plus mou que l'arbre (3).

10. Dispositif de serrage selon l'une quelconque des revendications 1 à 9,
**caractérisé en ce que**
la cale d'écrou (18) avec son écrou (8) se compose d'un matériau plus dur que l'arbre (3).
